# EUROPEAN PATENT APPLICATION

(11) **EP 2 845 857 A1**
(43) Date of publication of application: **11.03.2015**
(21) Application number: 13183727.0
(22) Date of filing: 10.09.2013
(51) Int. Cl.: C07F 7/08

(54) **Use of cyclohexa-2,5-dien-1-yl-silanes as precursors for gaseous hydrosilanes**

(71) Applicant: Technische Universität Berlin, 10623 Berlin (DE)
(72) Inventor: Oestreich, Martin, Prof. Dr., 13503 Berlin (DE); Simonneau, Antoine, Dr., 10243 Berlin (DE)
(74) Representative: Gulde & Partner

(57) **Abstract**

The invention relates to the use of cyclohexa-2,5-dien-1-yl-silanes of general formula I 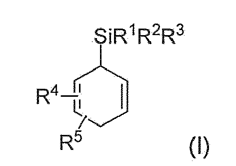 for generation of hydrosilanes in solution using a strong Lewis acid. This way, e.g., alkenes can be hydrosilylated in good yields using the cyclohexa-2,5-dien-1-yl-silanes of general formula I as transfer hydrosilylating agents in the presence of a strong Lewis acid as catalyst with concomitant formation of an arene solvent.

## Description

The invention relates to the use of cyclohexa-2,5-dien-1-yl-silanes of general formula I to generate hydrosilanes in solution using a strong Lewis acid. This way e.g. alkenes can be hydrosilylated in good yields using the cyclohexa-2,5-dien-1-yl-silanes of general formula I as transfer hydrosilylating agents in the presence of a strong Lewis acid as catalyst with concomitant formation of an arene solvent.

Alkene hydrosilylation is one of the prevalent methods for carbon-silicon bond formation in academic as well as in industrial settings. Usually catalyzed by precious late transition metal complexes, substantial progress is currently being made in the design of catalysts based on more abundant transition metals. Various triorganosilanes (R₃SiH) but also flammable trichlorosilane (Cl₃SiH) and harmful trialkoxysilanes [(RO)₃SiH with R = Me or Et] are commonly employed in these catalyses. Conversely, Me₃SiH and Me₂SiH₂ are rarely applied as handling of these highly flammable and potentially explosive gases is inconvenient from a safety point of view.

Practical methods avoiding these issues would, therefore, be relevant to several areas of silicon chemistry and are the object of the present invention.

The inventors of the present invention have solved this problem by using cyclohexa-2,5-dien-1-yl-silanes of general formula I 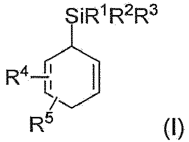 wherein
R¹ and R² represent independently from each other C₁-C₃-alkyl or C₁-C₃-alkoxy,
R³ represent independently from R¹ and R² H, C₁-C₃-alkyl, C₁-C₃-alkoxy or aryl and
R⁴ and R⁵ represent independently from each other H, C₁-C₃-alkyl or R¹R2²R³Si with
R¹ to R³ as defined above,
for generation of hydrosilanes of general formula la in solution

R¹R²R³SiH (Ia),

with R¹ to R³ as above,
using a Lewis acid of general formulae II or IIa

B(C₆FₘHₙ)₃ (II)

wherein m+n=5, m = 0 to 5 and n = 0 to 5,

BF₃·O(R)₂ (IIa)

wherein R is methyl or ethyl,
under concomitant formation of an arene solvent.

The inventors have found that cyclohexa-2,5-dien-1-yl-silanes of general formula I serve as viable hydrosilane precursors. It revealed that Lewis acids, particularly the Lewis acids of formulae II and IIa, a few of them being commercially available, were able to catalyze the release of hydrosilanes of formula la from cyclohexa-2,5-dien-1-yl-silanes of formula I.

This new technique was used for hydrosilylation of alkenes which was promoted by the same catalysts of formula II and IIa. It was found that the alkenes of general formula III 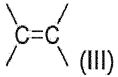 react in solution with the formed hydrosilanes of general formula la

R¹R²R³SiH (Ia),

wherein R¹ to R³ have the above meaning,
to silanes of general formula IV 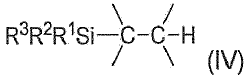 with R¹ to R³ as above.

Therefore, the net reaction corresponds to an unprecedented ionic transfer hydrosilylation of alkenes using cyclohexa-2,5-dien-1-yl-silanes of general formula I catalyzed by the Lewis acids of formula II or IIa under concomitant formation of an arene solvent. The byproducts of this reaction, arene solvent and unreacted hydrosilane of formula la, can be easily removed from the reaction mixture. Accordingly, the hydrosilylation of alkenes is also an object of the present invention.

According to the present invention C₁-C₃-alkyl means methyl, ethyl, n-propyl or i-propyl and C₁-C₃-alkoxy means methoxy, ethoxy, 1-propoxy or 2-propoxy. Aryl means phenyl, tolyl, xylyl, mesityl, naphth-1-yl and naphth-2-yl. Arene solvents according to the invention are benzene, alkyl or triorganosilyl benzenes, preferably toluene, xylene cumene or trimethylsilyl benzene.

In an embodiment of the invention, cyclohexa-2,5-dien-1-yl-silanes of general formula I are used wherein R¹, R² and R³ are equal to each other representing methyl, ethyl, i-propyl, methoxy or ethoxy. In a preferred embodiment of the invention, R¹, R² and R³ are methyl, ethyl, methoxy or ethoxy. It is especially preferred that R¹, R² and R³ are methyl, methoxy or ethoxy.

In another embodiment of the invention at least one of R⁴ and R⁵ in formula I is methyl or trimethylsilyl.

In yet another embodiment of the invention cyclohexa-2,5-dien-1-yl-silanes of general formula I are used wherein R¹ and R² are equal to each other representing methyl, ethyl, methoxy or ethoxy, preferably methyl and methoxy, and R³ represents H or aryl, preferably phenyl.

Following compounds of formula I are particularly preferred:

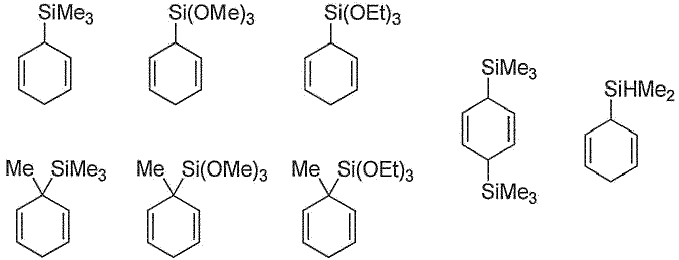

According to the invention, in one embodiment the catalyst of formula II is tris(pentafluorophenyl)borane B(C₆F₅)₃, but also boron trifluoride diethyletherate or dimethyletherate of formula IIa can be used, preferably boron trifluoride diethyletherate. It is also possible to use AlCl₃ as catalyst.

The release of hydrosilanes from formula I and the hydrosilylation of alkenes are conducted in a solvent at ambient temperature. According to the present invention, ambient temperature means 15 to 30°C. As solvent it is preferred to use an arene solvent, preferably benzene, toluene, xylene, or a halogenated solvent, preferably CH₂Cl₂, 1,2-dichlorethane or chloroform. Transfer hydrosilylation of alkenes occurred in high yields from 80 to 95 % in CH₂Cl₂ with cyclohexa-2,5-dien-1-yl-trimethylsilane of formula I as precursor. It is remarkable that only little excess of this precursor is necessary for high yield, because this precursor is gaseous at room temperature.

According to the present invention the alkenes which are hydrosilylated are alkenes of general formula IIIa 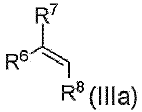 wherein
R⁶ represents H, C₄-C₂₀-alkyl, C₄-C₂₀-cydoalkyl or aryl, preferably C₄-C₈-alkyl or phenyl,
R⁷ represents H, C₁-C₁₀-alkyl, C₄-C₁₀-cycloalkyl or aryl, preferably C₁-C₄-alkyl or phenyl,
or R⁶ and R⁷ form together a cycloalkane ring, preferably a cyclohexane ring,
and
R⁸ represents H, methyl, ethyl, -CH₂Hal or phenyl.

According to the present invention Hal means halogen being chlorine, bromine or iodine, preferably chlorine or bromine.

Some alkenes of formula IIIa which are hydrosilylated with cyclohexa-2,5-dien-1-yl-trimethylsilane of formula I and their end products are given in Table 1:

| | | |
|---|---|---|
| 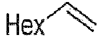 | | 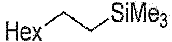 |
| 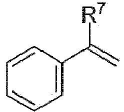 | R⁷ = H | 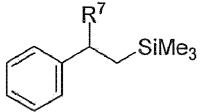 |
| | R⁷ = Me | |
| | R⁷ = Ph | |
| 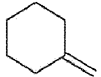 | | 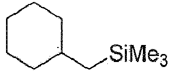 |
| 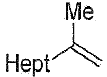 | | 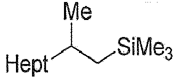 |
| 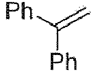 | | 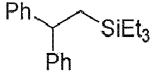 |
| 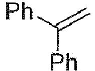 | | 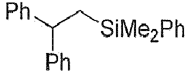 |

Particularly preferred alkenes for hydrosilylation with the new technique of the present invention are alkenes of general formula IIIa with R⁸ representing -CH₂Hal and R⁶ and R⁷ representing hydrogen. Hydrosilylation of these alkenes, especially allylchloride, with a cyclohexa-2,5-dien-1-yl-trimethylsilane of formula I wherein R¹, R² and R³ are equal to each other and represent methoxy or ethoxy results in commercially interesting trialkoxysilanes.

Further alkenes which can be hydrosilylated with the new technique of the invention are alkenes of general formula IIIb 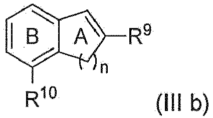 wherein
a) in case that both rings A and B are present,
   n is 1 or 2,
   R⁹ represents H,C₁-C₂₀-alkyl or C₄-C₂₀-cycloalkyl, preferably C₁-C₄-alkyl,
   R¹⁰ represents H or halogen;
   and
b) in case that ring B is not present,
   in the cyclic alkene of ring A n is 1-4, preferably 2 or 3, and R⁹ represents H or methyl.

Additionally, a further alkene which is hydrosilylated according to the invention is norbornene (IIIc).

Some preferred alkenes of formulae IIIb and IIIc which are hydrosilylated with transfer hydrosilylating agents of formula I and their end products are given in Table 2:

| | | |
|---|---|---|
| 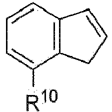 | R¹⁰ = H | 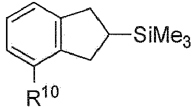 |
| | R¹⁰ = Br | |
| 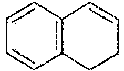 | | 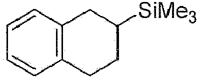 |
| 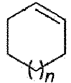 | *n* = 1 | 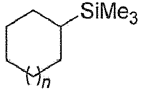 |
| | *n* = 2 | |
| 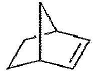 | | 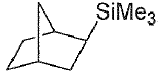 |
| 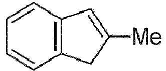 | | 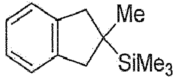 |
| 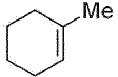 | | 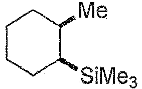 |
| 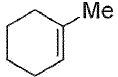 | | 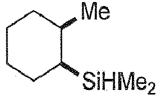 |

The cyclohexa-2,5-dien-1-yi-silanes of general formula I are not only useful as transfer hydrosilylating agents for alkenes but can also be used for Si-O bond formation in carbonyl reduction and dehydrogenative coupling with alcohols as well as hydrodehalogenation.

The following examples are offered to illustrate the present invention. They are not intended to be limiting in any respect.

### Preparation Examples

### 1 General information

All reactions were performed in flame-dried glassware using an MBraun glove box (O₂ < 0.5 ppm, H₂O < 0.5 ppm) or conventional Schlenk techniques under a static pressure of argon (glove box) or nitrogen. Liquids and solutions were transferred with syringes. CH₂Cl₂, benzene, n-pentane, and THF were purified and dried using a *MBraun* solvent system. 1,2-Dichloroethane was distilled over CaH₂, degassed, and stored in glove box over 4 Å molecular sieves. Toluene was distilled over Na, degassed, and stored in glove box over 4 Å molecular sieves. C₆D₆ (purchased from *Eurisotop*) was dried over 4 Å molecular sieves. [D8]Toluene and CD₂Cl₂ (purchased from *Eurisotop*) were distilled from the appropriate drying reagent, degassed and stored in glove box over 4 Å molecular sieves. Technical grade solvents for extraction and chromatography (cyclohexane, n-pentane, ethyl acetate, and tert-butyl methyl ether) were distilled prior to use. All commercially available alkenes were distilled, degassed, and stored in glove box over 4 Å molecular sieves. Analytical thinlayer chromatography (TLC) was performed on silica gel SIL G-25 glass plates from *Macherey-Nagel*. Flash column chromatography was performed on silica gel 60 (40-63 µm, 230-400 mesh, ASTM) by *Merck* using the indicated solvents. ¹H and ¹³C NMR spectra were recorded in C₆D₆ on *Bruker* AV 400 and *Bruker* AV 500 instruments. Chemical shifts are reported in parts per million (ppm) downfield from tetramethylsilane and are referenced to the residual solvent resonance as the internal standard (C₆H₆: δ = 7.16 ppm for ¹H NMR and C₆D₆: δ = 128.06 ppm for ¹³C NMR). Data are reported as follows: chemical shift, multiplicity (br s = broad singlet, s = singlet, d = doublet, t = triplet, q = quartet, m = multiplet), coupling constant (Hz), and integration. Infrared (IR) spectra were recorded on an *Agilent Technologies* Cary 630 FT-IR spectrophotometer equipped with an ATR unit and are reported in wavenumbers (cm⁻¹). Gas liquid chromatography-mass spectrometry (GLC-MS) was performed on an *Agilent Technologies* GC-System 5975C with an *Agilent Technologies* Mass Selective Detector (EI) and a HP-5MS column. Gas liquid chromatography (GLC) was performed on a *Shimadzu* GC-17A gas chromatograph equipped with a SE-54 capillary column (30 m × 0.32 mm, 0.25 µm film thickness) by CS-Chromatographie Service using the following programs: 35-min: N₂ carrier gas, column flow 1.7 mL/min, injection temperature 280°C, detector temperature 300°C; temperature program: start temperature 40°C, heating rate 10°C/min, final temperature 280°C for 10 min. High resolution mass spectrometry (HRMS) analysis was performed by the analytical facility at the Institut für Chemie, Technische Universität Berlin.

### 2 Experimental Details for the Synthesis of Cyclohexa-2,5-dien-1-ylsilanes

### 2.1 General Procedure for the Synthesis of Compounds (GP1)

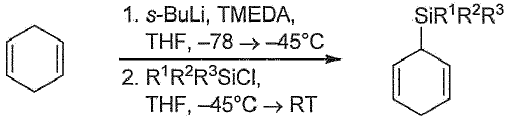

A flame-dried 100-mL Schlenk flask is charged with dry THF (0.7M) and cyclohexa-1,4-diene. The resulting solution is then cooled to -78°C. In a separate flame-dried 25-mL round-bottom flask equipped with a magnetic stir bar is introduced sec-BuLi (1.30M in hexanes, 1.0 equiv), followed by dropwise addition of TMEDA (1.0 equiv). The resulting dark-red slurry is subsequently added dropwise to the cooled THF solution of cyclohexa-1,4-diene, and the resulting mixture is then warmed to -45°C and maintained at this temperature for 3 h; the solution turns yellow within that time. The corresponding chlorosilane (1.0 equiv) in THF (2.5M) is finally added dropwise at -4.5°C, and the resulting mixture is slowly warmed to room temperature. Saturated aqueous NH₄Cl (20 mL) are added, and the aqueous layer is extracted with *tert*-butyl methyl ether (2 × 20 mL). The combined organic layers are washed with brine (20 mL) and water (20 mL). After removal of all volatiles, the crude material is purified by either flash column chromatography or distillation.

### 2.2 Characterization Data of Compounds Cyclohexa-2,5-dien-1-ylsilanes

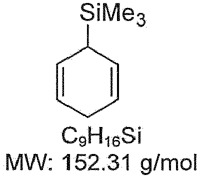

**Cyclohexa-2,5-dien-1-yltrimethylsilane.** Prepared according to GP1 from cyclohexa-1,4-diene (0.94 mL, 10.0 mmol, 1.0 equiv) and trimethylchlorosilane (1.27 mL, 10.0 mmol, 1.0 equiv). Purified by Kugelrohr distillation (30 mbar, 90°C). Colorless oil, 1.15 g, 76% yield. **IR** (ATR): /cm⁻¹ = 3026, 2956, 2893, 2823, 1668, 1623, 1434, 1333, 1294, 1246, 1099, 1051, 980, 937, 893, 833, 784, 749, 714, 690. **¹H NMR** (500 MHz, C₆D₆) δ = 5.68-5.65 (m, 2H), 5.55-5.52 (m, 2H), 2.78-2.55 (m, 2H), 2.18-2.11 (m, 1H), 0.01 (s, 9H). **¹³C NMR** (126 MHz, C₆D₆) δ = 126.5 (2C), 121.8 (2C), 31.8, 26.9, -3.5 (3C). **GLC-MS** (EI) for (C₉H₁₆Si): *m*/*z* 152.1 [M]⁺. **HRMS** (EI) exact mass for [M]⁺: calcd *m*/*z* 152.10158, found 152.10186.

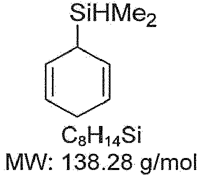

**Cyclohexa-2,5-dien-1-yldimethylsilane.** Prepared according to GP1 from an exc*e*ss of cyclohexa-1,4-diene (2.60 mL, 27.5 mmol, 1.1 equiv) and dimethylchlorosilane (2.78 mL, 25.0 mmol, 1.0 equiv): Purified by flash column chromatography over silica gel using *n-*pentane as eluent. Colorless oil, 1.89 g, 55% yield. **IR** (ATR): /cm⁻¹ = 3026, 2960, 2890, 2855, 2823, 2112, 1624, 1432, 1294, 1248, 1102, 1053, 937, 874, 835, 793, 741, 688, 660. **¹H NMR** (500 MHz, C₆D₆) δ = 5.68-5.61 (m, 2H), 5.56-5.49 (m, 2H), 4.09-3.99 (m, 1 H), 2.67-2.56 (m, 2H), 2.31-2.21 (m, 1H), 0.03 (d, *J* = 3.6, 6H). **¹³C NMR** (126 MHz, C₆D₆) δ = 126.0 (2C), 122.3 (2C), 29.6, 26.8, -6.4 (2C). **GLC-MS** (EI) for (C₈H₁₄Si): *m*/*z* 138.1 [M]⁺. **HRMS** (EI) exact mass for [M]⁺: calcd *m*/*z* 138.08593, found 138.08605.

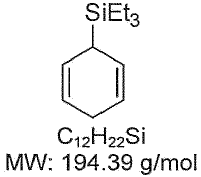

**Cyclohexa-2,5-dien-1-yltriethylsilane.** Prepared according to GP1 from cyclohexa-1,4-diene (0.94 mL, 10.0 mmol, 1.0 equiv) and triethylchlorosilane (1.68 mL, 10.0 mmol, 1.0 equiv). Purified by Kugelrohr distillation (30 mbar, 150°C). Colorless oil, 1.89 g, 97% yield. **IR** (ATR): /cm⁻¹ = 3026, 2952, 2910, 2876, 2821, 1624, 1458, 1416, 1378, 1334, 1294, 1239, 1100, 1053, 1008, 973, 938, 893, 777, 699, 664. **¹H NMR** (500 MHz, C₆D₆) δ = 5.70-5.66 (m, 2H), 5.54-5.51 (m, 2H), 2.78-2.59 (m, 2H), 2.43-2.33 (m, 1H), 0.96 (t, *J* = 8.0, 9H), 0.58 (q, *J* = 8.0, 6H). **¹³C NMR** (126 MHz, C₆D₆) δ = 126.8 (2C), 121.6 (2C), 28.7, 26.8, 7.8 (3C), 2.7 (3C). **GLC-MS** (EI) for (C₁₂H₂₂Si): *m*/*z* 194.1 [M]⁺, 115.1 [M-C₆H₇]⁺. **HRMS** (EI) exact mass for [M]⁺: calcd m/z 194.14853, found 194.14836.

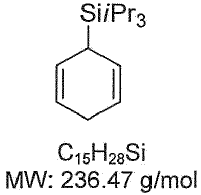

**Cyclohexa-2,5-dien-1-yltriisopropylsilane.** Prepared according to GP1 from cyclohexa-1,4-diene (0.94 mL, 10.0 mmol, 1.0 equiv) and triisopropylchlorosilane (2.16 mL, 10.0 mmol, 1.0 equiv). Purified by flash column chromatography over silica gel using cyclohexane as eluent. White solid, 1.56 g, 66% yield. **IR** (ATR): /cm⁻¹ = 3021, 2942, 2887, 2864, 2823, 1459, 1431, 1382, 1335, 1293, 1254, 1110, 1072, 1015, 943, 885, 763, 669. **¹H NMR** (500 MHz, C₆D₆) δ = 5.82-5.71 (m, 2H), 5.56-5.46 (m, 2H), 2.79-2.68 (m, 2H), 2.66-2.59 (m, 1H), 1.22-1.05 (m, 21H). **¹³C NMR** (126 MHz, C₆D₆) δ = 127.5 (2C), 121.6 (2C), 27.0, 26.6, 19.2 (6C), 11.7 (3C). **GLC-MS** (EI) for (C₁₅H₂₈Si): m/z 236.2 [M]⁺. **HRMS** (EI) exact mass for [M]⁺: calcd *m*/*z* 236.19548, found 236.19557.

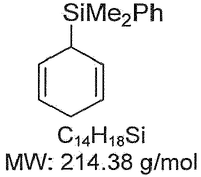

**Cyclohexa-2,5-dien-1-yldimethyl(phenyl)silane.** Prepared according to GP1 from cyclohexa-1,4-diene (1.13 mL, 12.0 mmol, 1.0 equiv) and dimethylphenylchlorosilane (1.99 mL, 12.0 mmol, 1.0 equiv). Purified by flash column chromatography over silica gel using cyclohexane as eluent. Colorless oil, 1.77g, 69% yield. **IR** (ATR): /cm⁻¹ = 3025, 2958, 2890, 2851, 2820, 1427, 1294, 1246, 1111, 1051, 935, 892, 832, 809, 795, 759, 726, 696. **¹H NMR** (500 MHz, C₆D₆) δ = 7.50-7.45 (m, 2H), 7.24-7.19 (m, 3H), 5.73-5.61 (m, 2H), 5.55-5.45 (m, 2H), 2.68-2.57 (m, 1H), 2.56-2.39 (m, 2H), 0.26 (s, 6H). **¹³C NMR** (126 MHz, C₆D₆) δ = 137.7, 134.3 (2C), 129.4 (2C), 128.3, 126.2 (2C), 122.3 (2C), 31.3, 26.8, -5.2 (2C). **GLC-MS** (EI) for (C₁₄H₁₈Si): *m*/*z* 214.2 [M]⁺, 199.1 [M-CH₃]⁺, 137.1 [M-C₆H₅]⁺. **HRMS** (EI) exact mass for [M]⁺: calcd *m*/*z* 214.11723, found 214.11621.

### 3 Experimental Details for the Synthesis of Silanes by Transfer Hydrosilylation

### 3.1 General Procedure for the Catalytic Transfer Hydrosilylation of Alkenes with Cyclohexa-2,5-dien-1-ylsilanes (GP2)

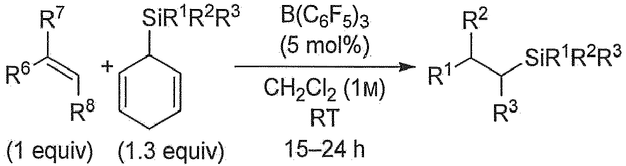

In glove box, a 1.3-mL GLC vial is charged with B(C₆F₅)₃ (5.0 mol%) and a magnetic stir bar. Into a separate vial are weighed the alkene (1.0 equiv) and the cyclohexa-2,5-dien-1-ylsilane (1.3 equiv). Both reagents are dissolved in CH₂Cl₂ (1.0M) and the resulting solution is added to the catalyst. The vial is then capped, and the solution is stirred in the glove box. The reaction is monitored by GLC and typically requires 15 to 24 h stirring at room temperature. The mixture is finally diluted with n-pentane (0.3 mL), filtered over a small Celite^{®}/SiO₂ column (1 cm Celite^{®} covered with 0.5 cm SiO₂, eluting with n-pentane), and all volatiles are removed under reduced pressure. If necessary, the crude target compound is purified by either flash column chromatography or Kugelrohr distillation.

### 3.2 Characterization Data of Compounds

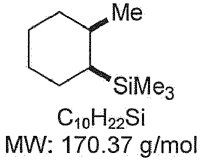

***cis*-Trimethyl(2-methylcyclohexyl)silane.** Prepared according to GP2 from 1-methylcyclohexene (48.1 mg, 0.50 mmol, 1.0 equiv) and cyclohexa-2,5-dien-1-yltrimethylsilane (99.0 mg, 0.65 mmol, 1.3 equiv). Reaction was stopped after 24 h. Purified by flash column chromatography using *n*-pentane as eluent. cis configuration was assigned by analogy with the B(C₆F₅)₃-catalyzed hydrosilylation of 1-methylcyclohexene with dimethylphenylsilane and consistent NMR data. Colorless oil, 74 mg, 87% yield. **IR** (ATR): /cm⁻¹ = 2955, 2919, 2850, 2812, 1444, 1405, 1378, 1247, 1200, 1156, 1106, 1059, 1018, 954, 871, 828, 744, 687. **¹H NMR** (500 MHz, C₆D₆) δ = 1.99-1.93 (m, 1 H), 1.68 (ddd, *J* = 11.4, 5.7, 2.4, 1H), 1.60-1.32 (m, 6H), 1.27-1.15 (m, 1 H), 0.93 (d, *J* = 7.2, 3H), 0.86-0.69 (m, 1 H), 0.01 (s, 9H). **¹³C NMR** (126 MHz, C₆D₆) δ = 35.4, 30.8, 30.0, 28.6, 22.5, 21.7, 16.5, -1.9 (3C). **GLC-MS** (EI) for (C₁₀H₂₂Si): *m*/*z* 170.1 [M]⁺, 155.1 [M-CH₃]⁺. **HRMS** (EI) exact mass for [M]⁺: calcd *m*/*z* 170.14853, found 170.14856.

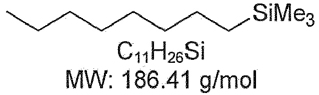

**Trimethyl(octyl)silane.** Prepared according to GP2 from oct-1-ene (22.4 mg, 0.20 mmol, 1.0 equiv) and cyclohexa-2,5-dien-1-yltrimethylsilane (39.6 mg, 0.26 mmol, 1.3 equiv). Conversion was complete after 15 h. Crude material did not require purification. Colorless oil, 31 mg, 84% yield. **IR** (ATR): /cm⁻¹ = 2956, 2922, 2855, 1459, 1412, 1295, 1248, 1175, 1110, 1001, 833, 755, 723, 690. **¹H NMR** (500 MHz, C₆D₆) δ = 1.44-1.18 (m, 12H), 1.02-0.86 (m, 3H), 0.59-0.47 (m, 2H), 0.03 (s, 9H). **¹³C NMR** (126 MHz, C₆D₆) δ = 34.1, 32.4, 29.8, 29.8, 24.4, 23.1, 17.0, 14.4, -1.5 (3C). **GLC-MS** (EI) for (C₂₂H₂₄Si): *m*/*z* 171.1 [M-CH₃]⁺. **HRMS** (EI) exact mass for [M]⁺: calcd *m*/*z* 186.17983, found 186.18008.

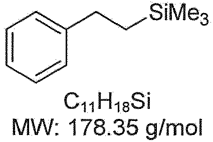

**Trimethyl(phenethyl)silane.** Prepared according to GP2 from styrene (20.8 mg, 0.20 mmol, 1.0 equiv) and cyclohexa-2,5-dien-1-yltrimethylsilane (39.6 mg, 0.26 mmol, 1.3 equiv). Conversion was complete after 17 h. Crude material did not require purification. Colorless oil, 28 mg, 78% yield. **IR** (ATR): /cm⁻¹ = 3028, 2954, 2900, 1603, 1496, 1454, 1412, 1302, 1248, 1174, 1124, 1030, 998, 902, 857, 830, 747, 693. **¹H NMR** (400 MHz, C₆D₆) δ = 7.24-7.17 (m, 2H), 7.14-7.07 (m, 3H), 2.61-2.50 (m, 2H), 0.85-0.70 (m, 2H), -0.03 (s, 9H). ¹³C **NMR** (101 MHz, C₆D₆) δ = 145.3, 128.6 (2C), 128.2 (2C), 125.9, 30.5, 18.8, -1.7 (3C). GLC-**MS** (EI) for (C₁₁H₁₈Si): *m*/*z* 178.1 [M]⁺, 163.1 [M-CH₃]⁺. **HRMS** (EI) exact mass for [M]⁺: calcd *m*/*z* 178.11723, found 178.11747.

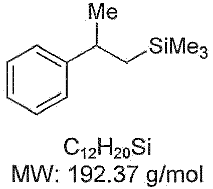

**Trimethyl(2-phenylpropyl)silane.** Prepared according to GP2 from α-methylstyrene (23.6 mg, 0.20 mmol, 1.0 equiv) and cyclohexa-2,5-dien-1-yltrimethylsilane (39.6 mg, 0.26 mmol, 1.3 equiv). Conversion was complete after 17 h. Crude material did not require purification. Colorless oil, 28 mg, 85% yield. **IR** (ATR): /cm⁻¹ = 3028, 2955, 2898, 1603, 1493, 1451, 1411, 1372, 1300, 1247, 1186, 1147, 1083, 1028, 913, 834, 761, 697. **¹H NMR** (400 MHz, C₆D₆) δ = 7.22-7.13 (m, 2H), 7.12-7.03 (m, 3H), 2.78 (dp, *J* = 8.6, 6.8, 1 H), 1.23 (d, *J* = 6.9, 3H), 0.92 (dd, *J* = 14.6, 8.6, 1 H), 0.78 (dd, *J* = 14.7, 6.6, 1 H), -0.11 (s, 9H). **¹³C NMR** (101 MHz, C₆D₆) δ = 149.7, 128.7 (2C), 127.1 (2C), 126.2, 36.9, 27.1, 27.0, -0.9 (3C). **GLC-MS** (EI) for (C₁₂H₂OSi): *m*/*z* 192.1 [M]⁺, 177.1 [M-CH₃]⁺, 105.1 [M-C₄H₁₁Si]⁺. **HRMS** (EI) exact mass for [M]⁺: calcd *m*/*z* 192.13288, found 192.13333.

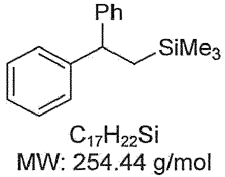

**(2,2-Diphenylethyl)trimethylsilane.** Prepared according to GP2 from 1,1-diphenylethylene (36.1 mg, 0.20 mmol, 1.0 equiv) and cyclohexa-2,5-dien-1-yltrimethylsilane (39.6 mg, 0.26 mmol, 1.3 equiv). Conversion was complete after 22 h. Crude material did not require purification. Colorless oil, 48 mg, 94% yield. **IR** (ATR): /cm⁻¹ = 3062, 3027, 2952, 2896, 1598, 1492, 1450, 1413, 1247, 1173, 1131, 1072, 1031, 1015, 849, 828, 780, 748, 694. **¹H NMR** (500 MHz, C₆D₆) δ = 7.19 (d, *J* = 7.2, 4H), 7.12 (t, *J* = 7.8, 4H), 7.01 (t, *J* = 7.3, 2H), 4.02 (t, *J* = 8.1, 1 H), 1.30 (d, *J* = 8.1, 2H), -0.16 (s, 9H). **¹³C NMR** (126 MHz, C₆D₆) δ = 147.5 (2C), 128.6 (4C), 128.0 (2C), 126.3 (4C), 47.8, 24.3, -1.1 (3C). **GLC-MS** (EI) for (C₁₇H₂₂Si): *mlz* 254.2 [M]⁺, 239.1 [M-CH₃]⁺. **HRMS** (EI) exact mass for [M]⁺: calcd *m*/*z* 254.14853, found 254.14933.

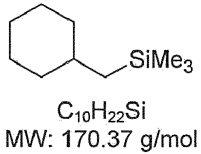

**(Cyclohexylmethyl)trimethylsilane.** Prepared according to GP2 from methylenecyclohexane (19.2 mg, 0.20 mmol, 1.0 equiv) and cyclohexa-2,5-dien-1-yltrimethylsilane (39.6 mg, 0.26 mmol, 1.3 equiv). Reaction was stopped after 24 h. Crude material did not require purification. Colorless oil, 29 mg, 85% yield. **IR** (ATR): /cm⁻¹ = 2921, 2853, 1448, 1413, 1247, 1152, 1033, 969, 889, 858, 832, 772, 755, 689. **¹H NMR** (400 MHz, C₆D₆) δ = 1.80-1.54 (m, 5H), 1.45-1.33 (m, 1 H), 1.33-1.05 (m, 3H), 1.03-0.82 (m, 2H), 0.49 (d, *J* = 6.9, 2H), 0.04 (s, 9H). **¹³C NMR** (126 MHz, C₆D₆) δ = 37.2 (2C), 34.8, 27.0 (2C), 26.7, 26.0, -0.4 (3C). **GLC-MS** (EI) for (C₁₀H₂₂Si): *m*/*z* 170.2 [M]⁺, 155.1 [M-CH₃]⁺. **HRMS** (EI) exact mass for [M]⁺: calcd *m*/*z* 170.14853, found 170.14842.

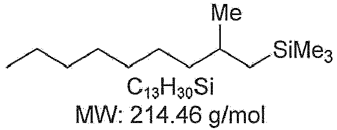

**Trimethyl(2-methylnonyl)silane.** Prepared according to GP2 from 2-methylnon-1-ene (28.1 mg, 0.20 mmol, 1.0 equiv) and cyclohexa-2,5-dien-1-yltrimethylsilane (39.6 mg, 0.26 mmol, 1.3 equiv). Conversion was complete after 17 h. Crude material did not require purification. Colorless oil, 35 mg, 81% yield. **IR** (ATR): /cm⁻¹ = 2955, 2925, 2855, 1459, 1414, 1376, 1295, 1248, 1216, 1108, 1030, 833, 784, 759, 689. **¹H NMR** (500 MHz, C₆D₆) δ = 1.69-1.55 (m, 1 H), 1.38-1.15 (m, 12H), 0.97 (d, *J* = 6.6, 3H), 0.94-0.89 (m, 3H), 0.67 (dd, *J* = 14.6, 5.1, 1 H), 0.42 (dd, *J* = 14.7, 8.5, 1 H), 0.06 (s, 9H). **¹³C NMR** (126 MHz, C₆D₆) δ = 41.1, 32.4, 30.4, 30.0, 29.9, 27.7, 25.5, 23.3, 23.2, 14.4, -0.4 (3C). **GLC-MS** (EI) for (C₁₃H₃₀Si): m/z 199.2 [M-CH₃], 115.1 [M-C₇H₁₅]⁺. **HRMS** (EI) exact mass for [M]⁺: calcd m/z 214.21113, found 214.21203.

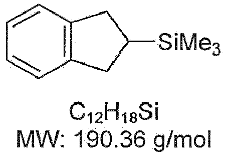

**(2,3-Dihydro-1*H*-inden-2-yl)trimethylsilane.** Prepared according to GP2 from indene (23.2 mg, 0.20 mmol, 1.0 equiv) and cyclohexa-2,5-dien-1-yltrimethylsilane (39.6 mg, 0.26 mmol, 1.3 equiv). Conversion was complete after 15 h. Purified by flash column chromatography using n-pentane as eluent. Colorless oil, 25 mg, 69% yield. **IR** (ATR): /cm⁻¹ = 3023, 2953, 2895, 2839, 1482, 1459, 1444, 1404, 1318, 1247, 1144, 1025, 990, 931, 908, 830, 747, 689. **¹H NMR** (400 MHz, C₆D₆) δ = 7.22-7.08 (m, 4H), 2.81 (dd, *J* = 15.2, 9.0, 2H), 2.64 (dd, *J* = 15.2, 10.3, 2H), 1.37 (p, *J* = 10.3, 1H), -0.05 (s, 9H). **¹³C NMR** (101 MHz, C₆D₆) δ = 145.0 (2C), 126.4 (2C), 124.5 (2C), 34.9 (2C), 26.3, -3.0 (3C). **GLC-MS** (EI) for (C₁₂H₁₈Si): *m*/*z* 190.1 [M]⁺, 175.1 [M-CH₃]⁺. **HRMS** (EI) exact mass for [M]⁺: calcd m/z 190.11723, found 190.11719.

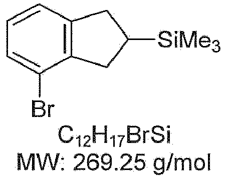

**(4-Bromo-2,3-dihydro-1H-inden-2-yl)trimethylsilane.** Prepared according to GP2 from 7-bromo-1*H*-indene (39.0 mg, 0.20 mmol, 1.0 equiv) and cyclohexa-2,5-dien-1-yltrimethylsilane (39.6 mg, 0.26 mmol, 1.3 equiv). Conversion was complete after 17 h. Purified by Kugelrohr distillation (10 mbar, 150°C). Colorless oil, 35 mg, 65% yield. **IR** (ATR): /cm⁻¹ = 2952, 2894, 2837, 1567, 1447, 1319, 1248, 1162, 1137, 1117, 1057, 987, 914, 831, 763, 689. **¹H NMR** (500 MHz, C₆D₆) δ = 7.25 (d, *J* = 7.9, 1 H), 6.88 (d, *J* = 7.3, 1 H), 6.74 (t, *J* = 7.6, 1 H), 3.03 (dd, *J* = 16.3, 9.1, 1 H), 2.73 (dt, *J* = 16.1, 9.9, 2H), 2.59 (dd, *J* = 15.9, 10.7, 1 H), 1.26 (p, *J* = 9.8, 1 H), -0.11 (s, 9H). **¹³C NMR** (126 MHz, C₆D₆) δ = 147.1, 145.5, 129.6, 128.3, 123.2, 120.3, 36.6, 36.1, 25.2, -3.1 (3C). **GLC-MS** (EI) for (C₁₂H₁₇BrSi): *m*/*z* 270.0 [M]⁺, 255.0 [M-CH₃]⁺. **HRMS** (EI) exact mass for [M]⁺: calcd *m*/*z* 268.02774, found 268.02740.

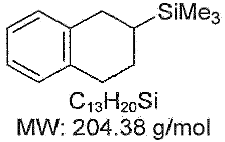

**Trimethyl(1,2,3,4-tetrahydronaphthalen-2-yl)silane.** Prepared according to GP2 from 1,2-dihydronaphthalene (26.0 mg, 0.20 mmol, 1.0 equiv) and cyclohexa-2,5-dien-1-yltrimethyl-silane (39.6 mg, 0.26 mmol, 1.3 equiv). Reaction was stopped after 24 h. Purified by flash column chromatography using n-pentane as eluent. Colorless oil, 27 mg, 66% yield. **IR** (ATR): /cm⁻¹ = 3018, 2953, 2912, 2834, 1581, 1494, 1450, 1433, 1350, 1291, 1247, 1158, 1109, 1078, 1041, 945, 922, 889, 829, 740, 687. **¹H NMR** (400 MHz, C₆D₆) δ = 7.12-7.06 (m, 2H), 7.06-7.00 (m, 2H), 2.71-2.41 (m, 4H), 1.81-1.66 (m, 1 H), 1.28 (tdd, *J* = 12.9, 10.8, 6.3, 1H), 0.75 (tdd, *J* = 12.5, 5.0, 2.6, 1H), -0.05 (s, 9H). **¹³C NMR** (101 MHz, C₆D₆) δ = 137.8, 137.3, 129.6, 129.2, 125.8, 125.8, 30.6 (2C), 24.4, 22.3, -3.6 (3C). **GLC-MS** (EI) for (C₁₃H₂₀Si): *m*/*z* 204.1 [M]⁺, 189.1 [M-CH₃]⁺. **HRMS** (EI) exact mass for [M]⁴: calcd *m*/*z* 204.13288, found 204.13337.

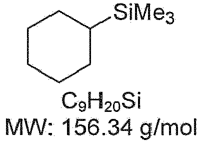

**Cyclohexyltrimethylsilane.** Prepared according to GP2 from cyclohexene (16.4 mg, 0.20 mmol, 1.0 equiv) and cyclohexa-2,5-dien-1-yltrimethylsilane (39.6 mg, 0.26 mmol, 1.3 equiv). Reaction was stopped after 19 h. Crude material did not require purification. Colorless oil, 19 mg, 61% yield. **IR** (ATR): /cm⁻¹ = 2954, 2919, 2846, 1446, 1293, 1247, 1100, 1039, 997, 889, 858, 826, 745, 687. **¹H NMR** (500 MHz, C₆D₆) δ = 1.83-1.49 (m, 5H), 1.31-0.93 (m, 5H), 0.49 (tt, *J* = 12.8, 3.1, 1H), -0.04 (s, 9H). **¹³C NMR** (126 MHz, C₆D₆) δ = 28.5 (2C), 27.7 (2C), 27.4, 26.4, -3.5 (3C). **GLC-MS** (EI) for (C₉H₂₀Si): *m*/*z* 156.1 [M]⁺, 141.1 [M-CH₃]⁺. **HRMS** (EI) exact mass for [M]⁺: calcd *m*/*z* 156.13288, found 156.13357.

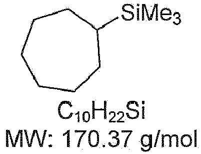

**Cycloheptyltrimethylsilane.** Prepared according to GP2 from cycloheptene (48.1 mg, 0.50 mmol, 1.0 equiv) and cyclohexa-2,5-dien-1-yltrimethyfsilane (99.0 mg, 0.65 mmol, 1.3 equiv). Reaction was stopped after 18 h. Purified by Kugelrohr distillation (1 atm N₂, 125°C). Colorless oil, 61 mg, 71% yield. **IR** (ATR): /cm⁻¹ = 2916, 2850, 1449, 1363, 1289, 1247, 1096, 1041, 1016, 897, 829, 741, 686. **¹H NMR** (500 MHz, C₆D₆) δ = 1.80-1.67 (m, 4H), 1.65-1.56 (m, 2H), 1.54-1.36 (m, 4H), 1.26-1.13 (m, 2H), 0.56 (tt, *J* = 11.0, 3.3, 1H), -0.01 (s, 9H). **¹³C NMR** (126 MHz, C₆D₆) δ = 30.4 (2C), 29.2 (2C), 28.8 (2C), 27.0, -3.2 (3C). **GLC-MS** (EI) for (C₁₀H₂₂Si): *m*/*z* 170.2 [M]⁺, 155.1 [M-CH₃]⁺. **HRMS** (EI) exact mass for [M]⁺: calcd *m*/*z* 170.14853, found 170.14848.

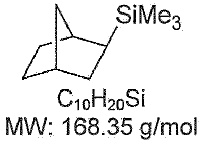

***exo*-Bicyclo[2.2.1]heptan-2-yltrimethylsilane.** Prepared according to GP2 from norbornene (47.1 mg, 0.50 mmol, 1.0 equiv) and cyclohexa-2,5-dien-1-yltrimethylsilane (**1**, 99.0 mg, 0.65 mmol, 1.3 equiv). Conversion was complete after 22 h. Purified by flash column chromatography using n-pentane as eluent. Exo configuration was assigned according to literature data. Colorless oil, 58 mg, 69% yield. **IR** (ATR): /cm⁻¹ = 2949, 2867, 1453, 1402, 1292, 1246, 1112, 1028, 998, 970, 908, 826, 743, 686. **¹H NMR** (500 MHz, C₆D₆) δ = 2.21 (br s, 1 H), 2.13 (br s, 1 H), 1.52 (dq, *J* = 6.1, 1.8, 2H), 1.39-1.29 (m, 2H), 1.24-1.14 (m, 3H), 1.08 (dt, *J* = 9.3, 1.8, 1 H), 0.44 (ddd, *J* = 9.4, 7.6, 1.6, 1 H), -0.02 (s, 9H). **¹³C NMR** (126 MHz, C₆D₆) δ = 38.2, 38.2, 37.3, 34.6, 32.8, 29.6, 29.3, -2.5 (3C). **GLC-MS** (EI) for (C₁₀H₂₀Si): *m*/*z* 168.1 [M]⁺, 153.1 [M-CH₃]⁺. **HRMS** (EI) exact mass for [M]⁺: calcd *m*/*z* 168.13288, found 168.13246.

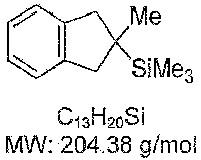

**Trimethyl(2-methyl-2,3-dihydro-1*H*-inden-2-yl)silane.** Prepared according to GP2 from 2-methyl-1H-indene (26.0 mg, 0.20 mmol, 1.0 equiv) and cyclohexa-2,5-dien-1-yltrimethylsilane (39.6 mg, 0.26 mmol, 1.3 equiv). Conversion was complete after 22 h. Purified by flash column chromatography using n-pentane as eluent and obtained in mixture with minor amounts of the other regiosiomer trimethyl(2-methyl-2,3-dihydro-1*H*-inden-1-yl)silane. Colorless oil, 32 mg, 73% yield, 5% yield of the regioisomer. **IR** (ATR): /cm⁻¹ = 3021, 2953, 2896, 2838, 1586, 1482, 1456, 1402, 1371, 1318, 1248, 1081, 1024, 936, 873, 830, 790, 739, 686. **¹H NMR** (500 MHz, C₆D₆) δ = 7.15-7.10 (m, 4H), 2.90 (d, *J* = 15.5, 2H), 2.40 (d, *J* = 15.4, 2H), 0.96 (s, 3H), -0.07 (s, 9H). **¹³C NMR** (126 MHz, C₆D₆) δ = 143.5 (2C), 126.6 (2C), 125.1 (2C), 43.0 (2C), 28.1, 23.5, -3.9 (3C). **GLC-MS** (EI) for (C₁₃H₂₀Si): m/z 204.1 [M]⁺, 189.1 [M-CH₃]⁺. **HRMS** (EI) exact mass for [M]⁺: calcd m/z 204.13288, found 204.13320.

**Trimethyl(2-methyl-2,3-dihydro-1*H*-inden-1-yl)silane.** Obtained as the minor component of a mixture, only partial data could have been collected. **¹H NMR** (500 MHz, C₆D₆) δ = 2.75 (dd, *J* = 14.4, 7.4, 1 H), 2.68 (dq, *J* = 9.2, 7.2, 1 H), 2.48 (ddd, *J* = 14.6, 9.2, 1.3, 1 H), 2.32 (d, *J* = 7.7, 1 H), 1.08 (d, *J* = 6.9, 3H), 0.04 (s, 9H), aromatic signals under those of the major isomer.

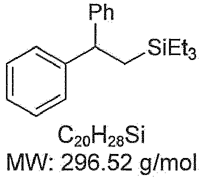

**(2,2-Diphenylethyl)triethylsilane.** Prepared according to GP2 from 1,1-diphenylethylene (36.1 mg, 0.20 mmol, 1.0 equiv) and cyclohexa-2,5-dien-1-yltriethylsilane (50.5 mg, 0.26 mmol, 1.3 equiv). After 42 h, GC monitoring showed no further conversion of the starting material and after work-up the desired product was obtained in mixture with 1,1-diphenylethylene. It could be removed by Kugelrohr distillation (25 mbar, 175°C). Colorless oil, 38 mg, 64% yield. **IR** (ATR): /cm⁻¹ = 3026, 2951, 2908, 2874, 1598, 1492, 1451, 1415, 1377, 1341, 1237, 1172, 1132, 1072, 1007, 964, 912, 854, 827, 776, 737, 695. **¹H NMR** (400 MHz, C₆D₆) δ = 7.28-7.20 (m, 4H), 7.14-7.09 (m, 4H), 7.07-6.98 (m, 2H), 4.07 (t, *J* = 7.9, 1 H), 1.38 (d, *J* = 7.9, 2H), 0.87 (t, *J* = 7.9, 8H), 0.37 (q, *J* = 8.0, 6H). **¹³C NMR** (101 MHz, C₆D₆) δ = 147.7 (2C), 128.7 (4C), 127.9 (4C), 126.3 (2C), 47.6, 19.4, 7.7 (3C), 3.9 (3C). **GLC-MS** (EI) for (C₂₀H₂₈Si): m/z 267.1 [M-C₂H₅]⁺.

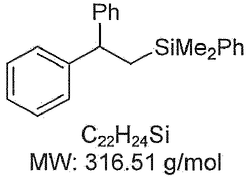

**(2,2-Diphenylethyl)dimethyl(phenyl)silane.** Prepared according to GP2 from 1,1-diphenylethylene (36.1 mg, 0.20 mmol, 1.0 equiv) and cyclohexa-2,5-dien-1-yldimethyl-(phenyl)silane (55.7 mg, 0.26 mmol, 1.3 equiv), complete conversion after 24 h. Purified by flash column chromatography using *n*-pentane/*tert*-butyl methyl ether 99:1 as eluent. Colorless oil, 59 mg, 94% yield. **IR** (ATR): /cm⁻¹ = 3064, 3025, 2954, 2900, 1598, 1492, 1450, 1427, 1248, 1172, 1111, 1071, 1030, 913, 863, 834, 809, 781, 728, 694. **¹H NMR** (400 MHz, C₆D₆) δ = 7.42-7.36 (m, 2H), 7.25-7.20 (m, 3H), 7.14-7.05 (m, 8H), 7.03-6.97 (m, 2H), 4.02 (t, *J* = 8.0, 1 H), 1.55 (d, *J* = 8.0, 2H), 0.01 (s, 6H). **¹³C NMR** (101 MHz, C₆D₆) δ = 147.3 (2C), 139.4, 134.0 (2C), 129.2, 128.6 (4C), 128.2 (2C), 128.0 (4C), 126.3 (2C), 47.6, 23.7, -2.5 (2C). **GLC-MS** (EI) for (C₂₂H₂₄Si): *m*/*z* 301.1 [M-CH₃]⁺.

### 3.3 Procedure for the Two-Fold Silylation of Styrene with Cyclohexa-2,5-dien-1-yldimethylsilane

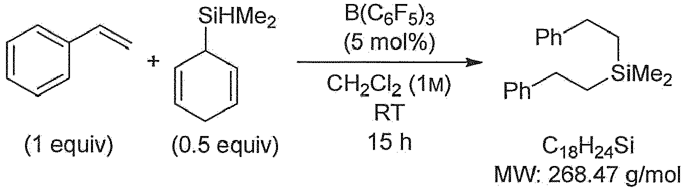

**Dimethyldiphenethylsilane.** In glove box, a 1.3-mL GLC vial was charged with B(C₆F₅)₃ (5.1 mg, 5.0 µmol, 5.0 mol%) and a magnetic stir bar. Into a separate vial were weighed styrene (20.6 mg, 0.20 mmol, 1.0 equiv) and cyclohexa-2,5-dien-1-yldimethylsilane (13.8 mg, 0.10 mmol, 0.50 equiv). Both reagents were dissolved in CH₂Cl₂ (0.2 mL), and the resulting solution was added to the catalyst. The vial was then capped and the solution stirred in the glove box. After 15 h, two drops of Et₃N were added to the reaction mixture, and the vial was stirred for 5 min. The mixture was finally diluted with n-pentane (0.3 mL), filtered over a small Celite^{®}/SiO₂ column (1 cm Celite^{®} covered with 0.5 cm SiO₂, eluting with n-pentane), and after removal of all volatiles the crude title compound was purified by flash column chromatography using n-pen-tane/tert-butyl methyl ether 98:2 as eluent. Colorless oil, 21 mg, 78% yield. **IR** (ATR): /cm⁻¹ = 3063, 3026, 2952, 2919, 1603, 1495, 1453, 1412, 1312, 1249, 1173, 1124, 1066, 1030, 997, 898, 831, 796, 768, 747, 722, 695. **¹H NMR** (400 MHz, C₆D₆) 6 = 7.24-7.18 (m, 4H), 7.14-7.07 (m, 6H), 2.58-2.48 (m, 4H), 0.85-0.70 (m, 4H), -0.06 (s, 6H). **¹³C NMR** (101 MHz, C₆D₆) δ = 145.3 (2C), 128.7 (4C), 128.2 (4C), 126.0 (2C), 30.4 (2C), 17.4 (2C), -3.4 (2C). **GLC-MS** (EI) for (C₁₈H₂₄Si): m/z 253.2 [M-CH₃]⁺, 163.1 [M-C₈H₉]⁺.

### 3.4 Procedure for the Transfer Hydrosilylation of 1-Methylcyclohexene with Cyclohexa-2,5-dien-1-yldimethylsilane

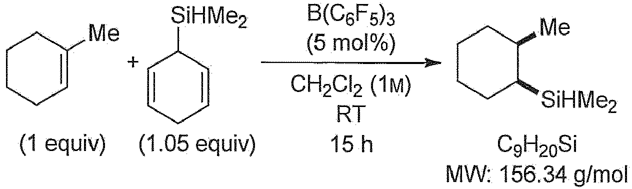

***cis*-Dimethyl(2-methylcyclohexyl)silane.** In glove box, a 1.3-mL GLC vial was charged with B(C₆F₅)₃ (12.8 mg, 25.0 µmol, 5.0 mol%) and a magnetic stir bar. Into a separate vial were weighed 1-methylcyclohexene (48.1 mg, 0.50 mmol, 1.0 equiv) and cyclohexa-2,5-dien1-yldimethylsilane (72.6 mg, 0.525 mmol, 1.05 equiv). Both reagents were dissolved in CH₂Cl₂ (0.2 mL), and the resulting solution was added to the catalyst. The vial was then capped, and the solution stirred in the glove box. After 15 h, four drops of Et₃N were added to the reaction mixture, and the vial was stirred for 5 min. The mixture was finally diluted with n-pentane (0.3 mL), filtered over a small Celite^{®}/SiO₂ column (1 cm Celite^{®} covered with 0.5 cm SiO₂, eluting with n-pentane), and after removal of all volatiles the crude title compound was purified by Kugelrohr distillation under a N₂ atmosphere (120°C). cis configuration was assigned by analogy with the B(C₆F₅)₃-catalyzed hydrosilylation of 1-methylcyclohexene with diphenylsilane and consistent NMR data. Colorless oil, 38 mg, 49% yield. **IR** (ATR): /cm⁻¹ = 2958, 2921, 2851, 2108, 1444, 1390, 1249, 1166, 1103, 1080, 955, 877, 833, 784, 759, 699. **¹H NMR** (500 MHz, C₆D₆) δ = 4.07 (h, *J* = 3.7, 1 H), 1.94-1.87 (m, 1 H), 1.64-1.34 (m, 7H), 1.29-1.21 (m, 1 H), 0.98 (d, *J* = 7.3, 3H), 0.85 (dq, *J* = 10.2, 3.9, 1 H), 0.05 (t, *J* = 3.8, 6H). **¹³C NMR** (126 MHz, C₆D₆) δ = 34.6, 31.2, 29.6, 27.7, 24.3, 22.7, 17.3, -4.4, -4.9. **GLC-MS** (EI) for (C₉H₂₀Si): *mlz* 156.1 [M]⁺, 141.1 [M-CH₃]⁺. **HRMS** (EI) exact mass for [M]⁺: calcd *mlz* 156.13288, found 156.13363.

## Claims

1. Use of cyclohexa-2,5-dien-1-yl-silanes of general formula (I) 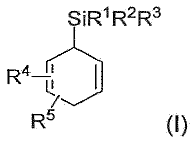 wherein
R¹ and R² represent independently from each other C₁-C₃-alkyl or C₁-C₃-alkoxy,
R³ represent independently from R¹ and R² H, C₁-C₃-alkyl, C₁-C₃-alkoxy or aryl and
R⁴ and R⁵ represent independently from each other H, C₁-C₃-alkyl or R¹R²R³Si with R¹ to R³ as defined above,
for generation of hydrosilanes of general formula la in solution
R¹R²R³SiH (Ia),
with R¹ to R³ as above,
using a Lewis acid of general formulae II or IIa
B(C₆FₘHₙ)₃ (II)
wherein m+n=5, m = 0 to 5 and n = 0 to 5,
BF₃·O(R)₂ (IIa)
wherein R is methyl or ethyl,
with concomitant formation of an arene solvent.

2. Use according to claim 1, wherein in the presence of alkenes of general formula III 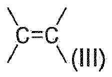 the alkenes react in solution with the hydrosilanes of general formula la
R¹R²R³SiH (Ia),
with R¹ to R³ as above,
to form silanes of general formula IV 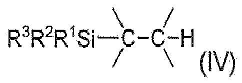 with R¹ to R³ as above.

3. Use according to claim 1 or 2, wherein R¹, R² and R³ in formula I are equal to each other representing methyl, ethyl, i-propyl, methoxy or ethoxy.

4. Use according to any one of claims 1 to 3, wherein R¹ and R² in formula I are equal to each other representing methyl, ethyl, methoxy or ethoxy, and R³ represents H or aryl.

5. Use according to any one of claims 1 to 4, wherein m in general formula II is 5 and n is 0.

6. Use according to any one of claims 1 to 5, wherein the reaction is conducted in a solvent at ambient temperature.

7. Use according to claim 6, wherein the solvent is an arene solvent or a halogenated solvent.

8. Use according to anyone of claims 2 to 7, wherein the alkenes which are hydrosilylated are alkenes of general formula IIIa 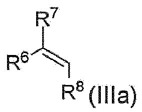 wherein
R⁶ represents H, C₄-C₂₀-alkyl, C₄-C₂₀-cycloalkyl or aryl,
R⁷ represents H, C₁-C₁₀-alkyl, C₄-C₁₀-cycloalkyl or aryl,
or R⁶ and R⁷ form together a cycloalkane ring,
and
R⁸ represents H, methyl, ethyl, -CH₂Hal or phenyl.

9. Use according to claim 8, wherein R⁶ and R¹ represent H and R⁸ represents a -CH₂Hal group, preferably -CH₂Cl.

10. Use according to anyone of claims 2 to 7, wherein the alkenes which are hydrosilylated are alkenes of general formula III b 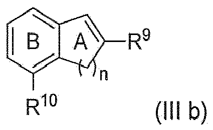 wherein
a) in case that both rings A and B are present,
n is 1 or 2,
R⁹ represents H, C₁-C₂₀-alkyl or C₄-C₂₀-cycloalkyl,
R¹⁰ represents H or halogen;
and
b) in case that ring B is not present,
in the cyclic alkene of ring A n is 1-4 and R⁹ represents H or methyl.

11. Use according to anyone of claims 2 to 7, wherein the alkene which is hydrosilylated is norbornene (III c).

12. Use of cyclohexa-2,5-dien-1-yl-silanes of general formula (I) 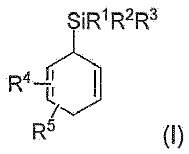 wherein
R¹ and R² represent independently from each other C₁-C₃-alkyl or C₁-C₃-alkoxy,
R³ represent independently from R¹ and R² H, C₁-C₃-alkyl, C₁-C₃-alkoxy or aryl and
R⁴ and R⁵ represent independently from each other H, C₁-C₃-alkyl or R¹R2²R³Si with R¹ to R³ as defined above,
as precursors for hydrosilanes of general formula la
R¹R²R³SiH (Ia),
wherein R¹ to R³ have the above meaning,
wherein a Lewis acid is used to release the hydrosilanes of general formula (Ia) from the cyclohexa-2,5-dien-1-yl-silanes of general formula (I).

13. Use of cyclohexa-2,5-dien-1-yl-silanes of general formula (I) 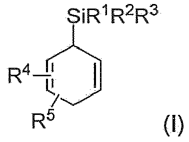 wherein
R¹ and R² represent independently from each other C₁-C₃-alkyl or C₁-C₃-alkoxy,
R³ represent independently from R¹ and R² H, C₁-C₃-alkyl, C₁-C₃-alkoxy or aryl and
R⁴ and R⁵ represent independently from each other H, C₁-C₃-alkyl or R¹R²R³Si with R¹ to R³ as defined above,
as transfer hydrosilylating agents for alkenes and carbonyl compounds.
